# EUROPÄISCHE PATENTSCHRIFT

(11) **EP 0 803 471 B1**
(45) Veröffentlichungstag und Bekanntmachung des Hinweises auf die Patenterteilung: **08.09.2004**
(21) Anmeldenummer: 97104499.5
(22) Anmeldetag: 17.03.1997
(51) Int. Cl.: C01F 17/00, C01B 13/18, C01G 23/04, C01G 25/02, C09K 3/14, C08K 3/22, C01G 23/07

(54) **Ceroxid-Metall / Metalloidoxid-Mischung**
Mixture of metalloid oxide/metal-cerium oxide
Mélange oxyde de métalloide/métal-oxyde de cérium

(30) Priorität: 26.04.1996 DE 19616780
(43) Veröffentlichungstag der Anmeldung: 29.10.1997
(73) Patentinhaber: Degussa AG, 40474 Düsseldorf (DE)
(72) Erfinder: Mangold, Helmut, Dr., 63517 Rodenbach (DE); Hartmann, Werner, Dr., 64832 Babenhausen (DE); Akam, Richard, 61184 Karben (DE)

(56) Entgegenhaltungen:
- EP-A- 0 649 885
- WO-A-93/22103
- US-A- 4 360 388

## Beschreibung

Die Erfindung betrifft eine feinteilige Ceroxid-Metall/Metalloidoxid-Mischung, das Verfahren zu ihrer Herstellung und ihre Verwendung.

Ein Gegenstand der Erfindung ist ein Verfahren zur Herstellung einer feinteiligen Ceroxid-Metall/Metalloidoxid-Mischung, enthaltend pyrogen hergestelltes Metall/Metalloidoxid und 0,001 bis 95 Gew.-% Ceroxid, mit einer spezifischen Oberfläche der erhaltenen Mischüng zwischen 10 und 400 m²/g welches dadurch gekennzeichnet ist, daß man pyrogen, insbesondere durch Flammenhydrolyse hergestelltes Metall/Metalloidoxid mit einer spezifischen Oberfläche zwischen 30 und 400 m²/g mit einer bei erhöhter Temperatur zum Oxid zersetzbaren Cerverbindung, vorzugsweise dem Cercarbonat, intensiv mischt und die Cerverbindung, bei Temperaturen zwischen 300 und 600 °C und bei Sinterzeiten zwischen 0,5 und 10 Stunden thermisch zum Oxid zersetzt.

In einer bevorzugten Ausführungsform der Erfindung kann man als mindestens eines der pyrogen, insbesondere durch Flammenhydrolyse hergestellten Metall/Metalloidoxide Oxide des Siliciums, Aluminiums, Bors, Titans oder Zirkoniums oder deren Mischungen bzw. deren Mischoxide mit einer bei erhöhter Temperatur zum Oxid zersetzbaren Cerverbindung intensiv mischen und die Cerverbindung thermisch zum Oxid zersetzen

Ein weiterer Gegenstand der Erfindung ist eine feinteilige Ceroxid-Metall/Metalloidox-Mischung, erhältlich nach diesem Verfahren.

Die erfindungsgemäße Mischung kann allein oder in Suspension als Poliermittel zur Polierung von Siliconwafers oder anderen in der Elektronikindustrie vorkommenden Polieraufgaben verwendet werden. Weiterhin kann sie als UVabsorbierender Füllstoff zur Füllung von Polymeren verwendet werden.

### Beispiel 1

950 g der pyrogenen Kieselsäure OX 50 werden mit 83,5 g Cercarbonat (Ce₂(CO₃)₃x5H₂O) 30 Minuten in einem Lödige-Mischer intensiv gemischt. Das Pulver wird anschließend bei einer Temperatur von 400 °C eine Stunde an Luft getempert. Der Gehalt an Ceroxid beträgt 5 Gew.-%, die resultierende BET-Oberfläche 44 m²/g.

### Beispiel 2

950 g der pyrogenen Kieselsäure OX 50 werden mit 83,5 g Cercarbonat (Ce₂(CO₃)₃x5H₂O) 30 Minuten in einem Lödige-Mischer intensiv gemischt. Das Pulver wird anschließend bei einer Temperatur von 500 °C eine Stunde an Luft getempert. Der Gehalt an Ceroxid beträgt 5 Gew.-%, die resultierende BET-Oberfläche 41 m²/g.

### Beispiel 3

900 g der pyrogenen Kieselsäure OX 50 werden mit 167 g Cercarbonat (Ce₂(CO₃)₃x5H₂O) 30 Minuten in einem Lödige-Mischer intensiv gemischt. Das Pulver wird anschließend bei einer Temperatur von 400 °C eine Stunde an Luft getempert. Der Gehalt an Ceroxid beträgt 10 Gew.-%, die resultierende BET-Oberfläche 44 m²/g.

### Beispiel 4

900 g der pyrogenen Kieselsäure OX 50 werden mit 167 g Cercarbonat (Ce₂(CO₃)₃x5H₂O) 30 Minuten in einem Lödige-Mischer intensiv gemischt. Das Pulver wird anschließend bei einer Temperatur von 500 °C eine Stunde an Luft getempert.

Der Gehalt an Ceroxid beträgt 10 Gew.-%, die resultierende BET-Oberfläche 42 m²/g.

| Analytik der nach Beispiele 1 bis 4 enthaltenen Pulverproben: | | | | | | | |
|---|---|---|---|---|---|---|---|
| Beispiel | CeO₂ Gew.-% | Sintertemperatur [°] | Sinterzeit [°] | Stampfdichte [g/l] | BET-Oberfläche [m²/g] | Trocknungsverlust Gew.-% | Glühverlust Gew.-% |
| 1 | 5 | 400 | 1 | 139 | 44 | 0,3 | 0,4 |
| 2 | 5 | 500 | 1 | 143 | 41 | 0,1 | 0,2 |
| 3 | 10 | 400 | 1 | 173 | 44 | 0,05 | 0,7 |
| 4 | 10 | 500 | 1 | 172 | 42 | 0,05 | 0,5 |
| Trocknungsverlust (2 h bei 105 °C, in Anlehnung an DIN/ISO 787/II, ASTM D 280, JIS K 5101/21). | | | | | | | |
| Glühverlust (2 h bei 1000°C, in Anlehnung an DIN 55921, ASTM D 1208, JIS K 5101/23, bezogen auf die 2 h bei 105 °C getrocknete Substanz). | | | | | | | |

Die eingesetzte pyrogen, durch Flammenhydrolyse von SiCl₄ hergestellte Kieselsäure OX 50 (Hersteller Degussa) weist die folgenden physikalisch-chemischen Kenndaten auf:

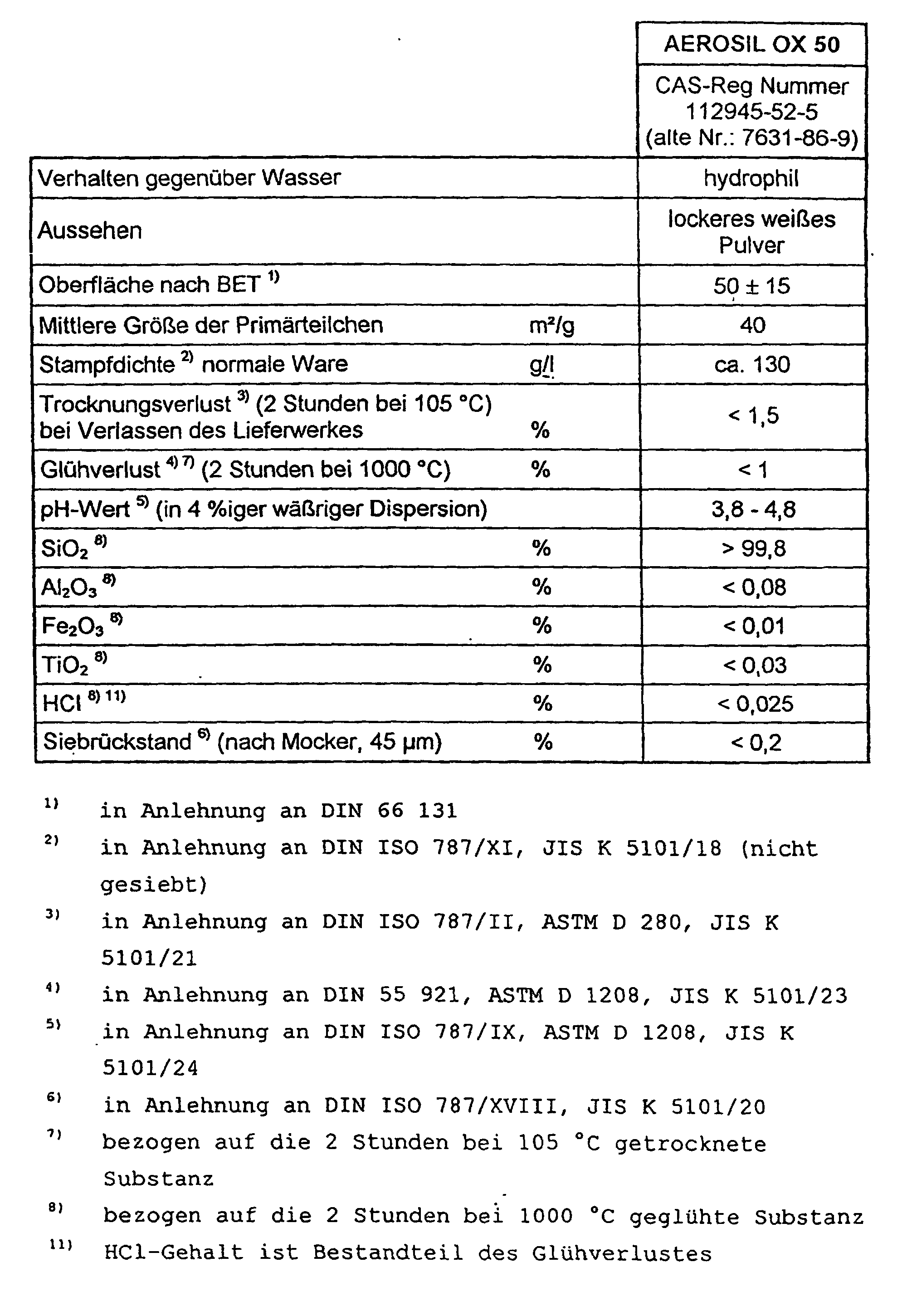

## Patentansprüche

1. Verfahren zur Herstellung einer feinteiligen Ceroxid-Metall/Metalloidoxid-Mischung enthaltend pyrogen hergestellte Metall/Metalloidoxid und 0,001 bis 95 Gew.-% Ceroxid, mit einer spezifischen Oberfläche der erhaltenen Mischung zwischen 10 und 400 m²/g; **dadurch gekennzeichnet, daß** man pyrogen hergestelltes Metall/Metalloidoxid mit einer spezifischen Oberfläche zwischen 30 und 400 m²/g mit einer bei erhöhter Temperatur zum Oxid zersetzbaren Cerverbindung intensiv mischt und die Cerverbindung bei Temperaturen zwischen 300 und 600°C und bei Sinterzeiten zwischen 0,5 und 10 Stunden thermisch zum Oxid zersetzt.

2. Verfahren nach Ansprüch 1, **dadurch gekennzeichnet, daß** man als mindestens eines der pyrogen hergestellten Metall/Metalloidoxide Oxide des Siliciums, Aluminiums, Bors, Titans oder Zirkoniums oder deren Mischungen bzw. deren Mischoxide mit einer bei erhöhter Temperatur zum Oxid zersetzbaren Cerverbindung intensiv mischt und die Cerverbindung thermisch zum Oxid zersetzt.

3. Feinteilige Ceroxid Metall/Metalloidoxid-Mischung, erhältlich nach dem Verfahren laut Anspruch 1 oder 2.

4. Verwendung der Oxide nach Anspruche 3 als Füllstoff in Polymeren oder als Poliermittel zum Polieren in der Elektronikindustrie.

## Claims

1. A process for producing a finely-divided cerium oxide-metal/metalloid oxide mixture containing pyrogenically produced metal/metalloid oxide and 0.001 to 95 wt.% cerium oxide, the resulting mixture having a specific surface area between 10 and 400 m²/g, **characterised in that** pyrogenically produced metal/metalloid oxide having a specific surface area between 30 and 400 m²/g is intensively mixed with a cerium compound decomposable to the oxide at elevated temperature and the cerium compound is thermally decomposed to the oxide at temperatures between 300° and 600°C and at sintering times between 0.5 and 10 hours.

2. A process according to claim 1, **characterised in that** at least one of the pyrogenically produced metal/metalloid oxides of silicon, aluminium, boron, titanium or zirconium or mixtures thereof or mixed oxides thereof is intensively mixed with a cerium compound decomposable to the oxide at elevated temperature and the cerium compound is thermally decomposed to the oxide.

3. Finely-divided cerium oxide-metal/metalloid oxide mixture obtainable by the process according to claim 1 or 2.

4. Use of the oxides according to claim 3 as fillers in polymers or polishing agents for polishing in the electronics industry.

## Revendications

1. Procédé pour fabriquer un mélange finement divisé d'oxyde de cérium-oxyde de métal/métalloïde, contenant un oxyde de métal/métalloïde fabriqué par pyrogénie et 0,001 à 95 % de poids d'oxyde de cérium, avec une surface spécifique du mélange obtenu comprise entre 10 et 400 m²/g,
**caractérisé en ce qu'**
on mélange de manière intensive un oxyde de métal/métalloïde fabriqué par pyrogénie et présentant une surface spécifique comprise entre 30 et 400 m²/ g, avec un composé de cérium converti à haute températures en oxyde, ce composé de cérium étant thermiquement converti en oxyde à des températures comprises entre 300 et 600°C et avec des durées de frittage allant de 0,5 à 10 heures.

2. Procédé selon la revendication 1,
**caractérisé en ce que**
on mélange de manière intensive comme au moins un des oxydes de métal/métalloïde fabriqué par pyrogénie, l'oxyde de silicium, d'aluminium, de bore, de titane ou de zirconium, ou leur mélange ou mélanges mixtes, avec un composé de cérium pouvant se décomposer à température élevée en oxyde, et ce composé de cérium est décomposé thermiquement en oxyde.

3. Mélange d'oxyde de cérium et d'oxyde de métal/métalloïde finement divisé, pouvant être obtenu selon le procédé de la revendication 1 ou 2.

4. Utilisation des oxydes selon la revendication 3, comme matière de charge dans les polymères ou comme agent de polissage utilisable dans l'industrie électronique.
